**Europäisches Patentamt**

**European Patent Office**

**Office européen des brevets**

(19)

(11) Veröffentlichungsnummer: **0 341 324 B1**

# EUROPÄISCHE PATENTSCHRIFT

(12)

(45) Veröffentlichungstag der Patentschrift: **11.12.91**

(21) Anmeldenummer: **88107408.2**

(22) Anmeldetag: **07.05.88**

(51) Int. Cl.⁵: **C09B 67/34**, C09B 67/14, //C09B37/00,D21H21/28

(54) **Verfahren zur Herstellung farbstabiler Lösungen von Azofarbstoffen.**

(43) Veröffentlichungstag der Anmeldung:
**15.11.89 Patentblatt 89/46**

(45) Bekanntmachung des Hinweises auf die Patenterteilung:
**11.12.91 Patentblatt 91/50**

(84) Benannte Vertragsstaaten:
**CH FR GB IT LI NL**

(56) Entgegenhaltungen:
**EP-A- 0 036 553**
**FR-A- 1 355 911**
**FR-A- 2 068 684**
**US-A- 3 310 362**

(73) Patentinhaber: **BASF Aktiengesellschaft**
**Carl-Bosch-Strasse 38**
**W-6700 Ludwigshafen(DE)**

(72) Erfinder: **Schmeidl, Karl, Dr.**
**Rene-Bohn-Strase 4a**
**W-6700 Ludwigshafen(DE)**

## Beschreibung

Die vorliegende Erfindung betrifft ein neues Verfahren zur Herstellung farbstabiler Lösungen von Azofarbstoffen, die durch Diazotieren und Kuppeln von gegebenenfalls substituiertem m-Phenylendiamin erhalten werden, durch Behandeln des nach beendeter Umsetzung resultierenden Reaktionsgemisches mit Ameisensäure in der Wärme.

Farbstoffe des Vesuvin-Typs werden in der Papierindustrie in große Mengen zur Herstellung gelber und brauner Färbungen verwendet. Bei den Vesuvin-Farbstoffen handelt es sich um Azofarbstoffe, die durch Diazotieren und Kuppeln von m-Phenylendiamin oder dessen Alkyl- oder Alkoxyderivaten erhalten werden. Dabei liegen in der Regel nicht einheitliche Farbstoffe, sondern Gemische von Mono-, Dis- und Polyazofarbstoffen vor, da die als Ausgangsprodukt verwendeten Diamine und deren Folgeprodukte nicht nur einfach sondern auch mehrfach diazotiert werden und kuppeln können. Beispielhaft seien die Farbstoffe der Colour Index (C. I.)-Nummern 21 000 (C. I. Basic Brown 1), 21 010 (C. I. Basic Brown 4) oder 21 020 (Basic Dye) genannt.

Leider neigen die Vesuvin-Farbstoffe beim Färben von Papier im sauren Bereich zu einer unerwünschten Verrötung, die ihre Verwendungsmöglichkeit stark einschränkt.

Aufgabe der vorliegenden Erfindung war es deshalb, ein Verfahren bereitzustellen, mit dessen Hilfe dieser Mangel behoben werden kann.

Es wurde gefunden, daß man farbstabile Lösungen von Azofarbstoffen, die durch Diazotieren mit Kuppeln von m-Phenylendiamin, das gegebenenfalls durch $C_1$-$C_4$-Alkyl oder $C_1$-$C_4$-Alkoxy substituiert ist, erhalten werden, vorteilhaft erhält, wenn man nach beendeter Umsetzung das resultierende Reaktionsgemisch mit 0,1 bis 1,2 Mol Ameisensäure, bezogen auf 1 Mol m-Phenylendiamin versetzt und bei einer Temperatur von 60°C bis zur Siedetemperatur des Reaktionsgemischs behandelt.

Als Ausgangsprodukt für die Azofarbstoffe dient m-Phenylendiamin, das gegebenenfalls durch $C_1$-$C_4$-Alkoxy substituiert ist. Vorzugsweise verwendet man unsubstituiertes oder durch eine Methyl- oder Methoxygruppe kernsubstituiertes m-Phenylendiamin.

Die Diazotierungs- und Kupplungsreaktion erfolgt nach an sich bekannten Methoden, wie sie beispielsweise in der EP-A-36 553 beschrieben sind.

Nach beendeter Umsetzung wird das resultierende Reaktionsgemisch mit 0,1 bis 1,2 Mol, vorzugsweise 0,3 bis 0,9 Mol Ameisensäure, jeweils bezogen auf 1 Mol m-Phenylendiamin, versetzt und bei einer Temperatur von 60°C bis zur Siedetemperatur des Reatkionsgemischs behandelt. Die Siedetemperatur des Reatkionsgemischs liegt im allgemeinen bei etwa 108°C Vorzugsweise erfolgt die Wärmebehandlung bei einer Temperatur von 70 bis 100°C und insbesondere von 80 bis 95°C. Die Wärmebehandlung erfolgt vorteilhaft unter atmosphärischem Druck. Eine Steigerung der Temperatur über den Siedepunkt des Reaktionsgemischs hinaus bringt keine weiteren Vorteile.

Die Ameisensäure kann dabei in reiner Form oder zweckmäßig in Form der technisch gebräuchlichen 85 Gew.% wäßrigen Lösung verwendet werden.

Die Behandlungszeit erstreckt sich in allgemeinen über einen Zeitraum von 1 bis 10 Stunden, vorzugsweise 3 bis 6 Stunden.

Nach beendeter Behandlung kann das Reaktionsgemisch mit einem wassermischbaren Lösungsmittel, z.B. mit Glykol oder einem Glykolether, wie Diethylenglykol, Dipropylenglykol oder Ethylenglykol- oder Diethylenglykolmonomethyl-, -ethyl-, -propyl-, oder -butylether versetzt und filtriert werden. Die Verwendung von Diethylenglykolmonobutylether (Butyldiglykol) ist bevorzugt. Die Zugabe von Butyldiglykol kann dabei auch vor der Behandlung mit Ameisensäure erfolgen. Die coloristischen Eigenschaften werden dadurch nicht verändert.

Es hat sich gezeigt, daß die mittels des neuen Verfahrens hergestellten Farbstofflösungen bei ihrer Anwendung in der Papierfärbung im sauren Bereich keine Verrötung mehr aufweisen.

Ein weiterer Vorteil der erfindungsgemäß behandelten Farbstofflösungen besteht darin, daß außerdem ihre Farbtonreinheit sowie ihre Lagerbeständigkeit, insbesondere im Hinblick auf den Erhalt der Farbstärke, verbessert werden.

Die folgenden Beispiele sollen die Erfindung näher erläutern. Die dort angegebenen Teile sind Gewichtsteile.

Beispiel 1

In einer Mischung aus 388 Teilen Essigsäure und 74 Teilen Wasser wurden 177 Teile m-Phenylendiamin gelöst. Anschließend ließ man bei einer Temperatur unterhalb von 23°C unter Kühlen 90 Teile Neopentylglykoldinitrit hinzufließen. Nach beendeter Zugabe wurde etwa 2 Stunden nachgerührt, dabei stieg die Temperatur des Reaktionsgemischs allmählich auf Raumtemperatur an. (Zwecks coloristischem Vergleich mit dem Endprodukt wurde eine Probe aus dem Reaktionsgemisch entnommen. )

Nun wurden 54 Teile 85 gew.%ige wäßrige Ameisensäure zugesetzt und das Reatkionsgemisch daraufhin im Verlauf von etwa 2 Stunden auf 95°C erwärmt. Man hielt 1 Stunde bei dieser Temperatur und kühlte dann ab.

Ein coloristischer Vergleich der Farbstofflösungen mit und ohne Ameisensäurebehandlung in der Papiermassefärbung auf Altpapier zeigte, daß das Verröten im sauren Bereich bei der unbehandelten Probe wesentlich größer ist als bei der mit Ameisensäure behandelten Endprobe.

Beispiel 2

Man verfuhr analog Beispiel 1, verwendete jedoch anstelle von m-Phenylendiamin 200 Teile 1-Methyl-2,4-diaminobenzol. Dabei erhielt man bezüglich des Verrötungseffekts ein ähnliches Ergebnis.

Beispiel 3

Man löste in 482 Teilen 90 gew.%iger wäßriger Essigsäure 177 Teile m-Phenylendiamin, kühlte auf 10 bis 15°C ab und ließ unter Rühren im Verlauf von 5 Stunden 100 Teile Neopentylglykoldinitrit hinzulaufen. Durch Kühlen hielt man die Temperatur unter 23°C. Man rührte 2 Stunden nach und ließ die Temperatur des Reaktionsgemischs dabei auf Raumtemperatur kommen.

Dann wurden 54 Teile 85 gew.%ige wäßrige Ameisensäure hinzugegeben, eine Stunde lang gerührt und für Vergleichszwecke Proben entnommen. Anschließend erwärmte man auf 50°C bis 60°C, hielt eine halbe Stunde bei dieser Temperatur und steigerte sie dann auf 90 bis 95°C. Nach 2,5 Stunden Rührdauer wurde auf 30 bis 35°C abgekühlt und klärfiltriert. Es verblieb kein Filterrückstand.

Im Vergleich zu einer Probe der wärmebehandelten Lösung zeigte eine vor dem Erwärmen genommene Probe bei Anwendung in der Papiermassefärbung ein trübes, rotstichiges Braun. Die Rotverschiebung der beiden Farbstofflösungen bei pH 5 (im Vergleich zur Papiermassefärbung bei pH 7) ist bei der nicht behandelten Probe erheblich stärker.

Außerdem wurde von den für Vergleichszwecke entnommenen unbehandelten Proben eine Probe 2 Monate bei etwa 0°C und eine andere Probe 2 Monate bei Raumtemperatur gelagert. Ebenso wurden zwei Proben von der wärmebehandelten Lösung entnommen, wobei wiederum die eine Probe 2 Monate bei etwa 0°C und die andere Probe 2 Monate bei Raumtemperatur gelagert wurde. Dabei zeigte sich bei der wärmebehandelten Lösung in der Papiermassefärbung kein Unterschied zwischen den bei verschiedener Temperatur gelagerten Proben. Dagegen war bei den nicht erfindungsgemäß behandelten Proben in der Papiermassefärbung ein Unterschied in der Farbstärke zu beobachten. Die Farbstärke der bei Raumtemperatur gelagerten Probe war etwa 15 % geringer als die der in der Kälte gelagerten Probe, d.h. die nicht erfindungsgemäß behandelte Lösung ist nicht lagerstabil und verliert bereits bei Raumtemperatur merklich an Farbstärke.

Beispiel 4

In 462 Teilen 95 gew.%iger wäßriger Essigsäure wurden 177 Teile m-Phenylendiamin gelöst. Unter Rühren ließ man im Temperaturbereich von 15 bis 20°C 120 Teile Neopentylglykoldinitrit im Verlauf von etwa 4 Stunden hinzufließen, wobei man durch Kühlen dafür sorgte, daß die Reaktionslösung den angegebenen Temperaturbereich nicht überschritt. Man rührte etwa 1 Stunde nach, fügte anschließend 54 Teile 85 gew.%ige wäßrige Ameisensäure hinzu, erwärmte dann 3 Stunden lang auf 90°C, kühlte ab und filtrierte.

Man erhielt eine dünnflüssige, lagerstabile Farbstofflösung. Die Papiermassefärbung lieferte ein farbloses Abwasser. Die Verschiebung des Braunfarbtons nach Rot bei der Papiermassefärbung auf Altpapier bei pH 5 (gegenüber pH 7) ist erheblich geringer als bei der Probe, die nicht mit Ameisensäure erwärmt wurde. Die Ameisensäurebehandlung verbesserte außerdem die Reinheit des Farbtons.

Beispiel 5

In einer Mischung aus 388 Teilen Essigsäure und 24 Teilen Wasser wurden 177 Teile m-Phenylendiamin gelöst und mit 110 Teilen Neopentylglykoldinitrit bei etwa 15 bis 20°C umgesetzt.

Nach einstündigem Nachrühren bei etwa 20°C wurden 54 Teile 85 %ige wäßrige Ameisensäure zugegeben, dann im Verlauf etwa 4 Stunden auf 90°C erwärmt und 1 Stunde bei dieser Temperatur gehalten. Hernach verdünnte man mit 50 Teilen Butyldiglykol, kühlte ab und filtrierte.

Man erhielt eine lagerstabile Farbstofflösung. Der Farbstoff hat sehr gutes Ziehvermögen auf Papier. Gegenüber einer Probe, die vor der Behandlung mit Ameisensäure genommen wurde, ist das Verröten im Sauren wesentlich verbessert, außerdem ist der Farbton reiner.

Beispiel 6

In einer Mischung aus 362 Teilen Essigsäure und 24 Teilen Wasser wurden 177 Teile m-Phenylendiamin gelöst und mit 110 Teilen Neopentylglykoldinitrit bei etwa 15 bis 20°C umgesetzt. Nach einstündigem Nachrühren bei etwa 20°C wurden 81 Teile 85 gew.%ige wäßrige Ameisensäure zugegeben und 3 Stunden auf 108°C (Sieden unter Rückfluß) erwärmt. Nach dem Verdünnen mit 50 Teilen Butyldiglykol wurde abgekühlt und filtriert.

Beispiel 7

In einer Mischung aus 335 Teilen Essigsäure und 34 Teilen Wasser wurden 177 Teile m-Phenylendiamin gelöst und mit 110 Teilen Neopentylglykoldinitrit bei etwa 15 bis 20°C umgesetzt. Nach einstündigem Nachrühren bei etwa 20°C wurden 107 Teile 85 gew.%ige wäßrige Ameisensäure zugegeben und analog Beispiel 5 erwärmt. Nach dem Verdünnen mit 50 Teilen Butyldiglykol wurde abgekühlt und filtriert. Es verblieb kein Filterrückstand.

Man erhielt einen Farbstoff mit ähnlichen Eigenschaften wie in Beispiel 6. Der Braun-Ton ist noch weniger rotstichig. Die Reinheit ist weiter gesteigert.

**Patentansprüche**

1.  Verfahren zur Herstellung farbstabiler Lösungen von Azofarbstoffen, die durch Diazotieren und Kuppeln von m-Phenylendiamin, das gegebenenfalls durch C$_1$-C$_4$-Alkyl oder C$_1$-C$_4$-Alkoxy substituiert ist, erhalten werden, dadurch gekennzeichnet, daß man nach beendeter Umsetzung das resultierende Reaktionsgemisch mit 0,1 bis 1,2 Mol Ameisensäure, bezogen auf 1 Mol m-Phenylendiamin, versetzt und bei einer Temperatur von 60°C bis zur Siedetemperatur des Reaktionsgemisches behandelt.

2.  Verfahren gemäß Anspruch 1, dadurch gekennzeichnet, daß man das Reatkionsgemisch mit 0,3 bis 0,9 Mol Ameisensäure, bezogen auf 1 Mol m-Phenylendiamin, behandelt.

**Claims**

1.  A process for preparing a stable-colored solution of an azo dye obtained by diazotizing and coupling m-phenylenediamine which may be C$_1$-C$_4$-alkyl- or C$_1$-C$_4$-alkoxy-substituted, which comprises, after the reaction has ended, treating the resulting reaction mixture with from 0.1 to 1.2 mol of formic acid, based on 1 mol of m-phenylenediamine, at from 60°C to the boiling point of the reaction mixture.

2.  A process as claimed in claim 1, wherein the reaction mixture is treated with from 0.3 to 0.9 mol of formic acid, based on 1 mol of m-phenylenediamine.

**Revendications**

1.  Procédé de préparation de solutions stables en couleur de colorants azoïques qui sont obtenues par diazotation et copulation de m-phénylènédiamine qui est éventuellement substituée par alkyle en C 1-C 4 ou alcoxy en C 1-C 4, caractérisé par le fait que, après la réaction terminée, le mélange de réaction résultant est mélangé de 0,1 à 1,2 mol d'acide formique, rapporté à 1 mol de m-phénylènédiamine et traité à une température de 60 degrés C jusqu'à la température d'ébullition du mélange de réaction.

2.  Procédé selon la revendication 1, caractérisé par le fait que l'on traite la mélange de réaction avec 0,3 à 0,9 mol d'acide formique, rapporté à 1 mol de m-phénylènédiamine.